Europäisches Patentamt

(19) European Patent Office

Office européen des brevets

(11) Numéro de publication: **0 049 669**
**A1**

(12) **DEMANDE DE BREVET EUROPEEN**

(21) Numéro de dépôt: **81401543.4**

(22) Date de dépôt: **06.10.81**

(51) Int. Cl.³: **F 24 J 3/00**
**F 24 D 11/00**

(30) Priorité: **07.10.80 FR 8021404**

(43) Date de publication de la demande:
**14.04.82 Bulletin 82/15**

(84) Etats contractants désignés:
**AT BE CH DE FR GB IT LI LU NL SE**

(71) Demandeur: **NOVELERG Société Anonyme dite:**
**12, rue de la Baume**
**F-75008 Paris(FR)**

(72) Inventeur: **Berthet, Michel**
**3, Domaine de Miremont**
**F-91190 Gif Sur Yvette(FR)**

(72) Inventeur: **Brouard, Dominique**
**23, rue St-Amand**
**F-75015 Paris(FR)**

(72) Inventeur: **Dubois, Pierre**
**19, rue des Abondances**
**F-92100 Boulogne Billancourt(FR)**

(72) Inventeur: **Ravelet, Robert**
**26, Bd Diderot**
**F-91120 Palaiseau(FR)**

(74) Mandataire: **Weinmiller, Jürgen et al,**
**Zeppelinstrasse 63**
**D-8000 München 80(DE)**

(54) **Bloc accumulateur de chaleur et application à un dispositif de stockage thermique.**

㊼ Bloc destiné à constituer par juxtaposition et/ou empilage de blocs indentiques un accumulateur de chaleur, ledit bloc étant parallélépipédique et présentant une pluralité de canaux (2) perpendiculaires à sa plus grande dimension et débouchant sur deux faces opposées (4, 5), caractérisé sur ce que lesdits canaux (2) sont disposés en deux rangées au moins et trois rangées au plus, lesdites rangées étant parallèles à la plus grande dimension du bloc, la section des canaux étant rectangulaire, le nombre et la section moyenne des canaux étant choisis de manière que le rapport du produit du coefficient d'échange thermique superficiel entre l'air et le béton par la demi-distance entre deux canaux à la conductibilité thermique du béton soit inférieur ou égal à 0,05.

FIG.1

Croydon Printing Company Ltd.

Bloc accumulateur de chaleur et application à un dispositif de
stockage thermique.

La présente invention concerne l'accumulation de la chaleur,
en particulier de celle fournie par des capteurs solaires à air.

On connaît, notamment par le brevet français n° 740 670, des
briques en céramiques utilisées par la construction des accumulateurs de chaleur.

Ces briques sont de forme parallélépipédique, munies de
cavités parallèles à leur plus grande dimension pour le passage des
gaz caloporteurs.

Ces briques en céramique ont l'inconvénient de présenter un
prix de revient élevé pour leur fabrication, en raison notamment
d'une forte dépense d'énergie pour leur cuisson.

On a pensé remplacer la matière céramique par du béton. Mais le
simple changement de matériau ne donne pas des résultats satisfaisant.

En effet, ou bien les blocs sont trop fragiles, ou bien leurs
propriétés d'absorber et de restituer la chaleur sont insuffisantes.

Un but de l'invention est de définir un bloc en béton facile à
construire par les techniques de moulage actuelles.

Un autre but de l'invention est de réaliser un bloc ayant des
propriétés optimales d'échange thermique avec l'air.

L'invention a pour objet un bloc destiné à constituer par
juxtaposition et/ou empilage de blocs identiques un accumulateur de
chaleur, ledit bloc étant parallélépipédique et présentant une pluralité de canaux perpendiculaires à sa plus grande dimension et
débouchant sur deux faces opposées, caractérisé sur ce que lesdits
canaux sont disposés en deux rangées au moins et trois rangées au
plus, lesdites rangées étant parallèles à la plus grande dimension
du bloc, la section des canaux étant rectangulaire, le nombre et la
section moyenne des canaux étant choisis de manière que le rapport du
produit du coefficient d'échange thermique superficiel entre l'air
et le béton par la demi-distance entre deux canaux à la conductibilité thermique du béton soit inférieur ou égal à 0,05.

L'invention sera précisée par la description qui suit faite en référence au dessin annexé dans lequel :

- les figures 1 à 3 sont des vues respectivement en élévation, de profil et de dessus d'un bloc selon l'invention

- la figure 4 est une vue en coupe transversale d'un dispositif de stockage utilisant les blocs précités

- la figure 5 est une vue en coupe selon la ligne V-V de la figure 4.

- les figures 6 et 7 sont des vues partielles agrandies d'un dispositif de stockage d'énergie utilisant les blocs précités.

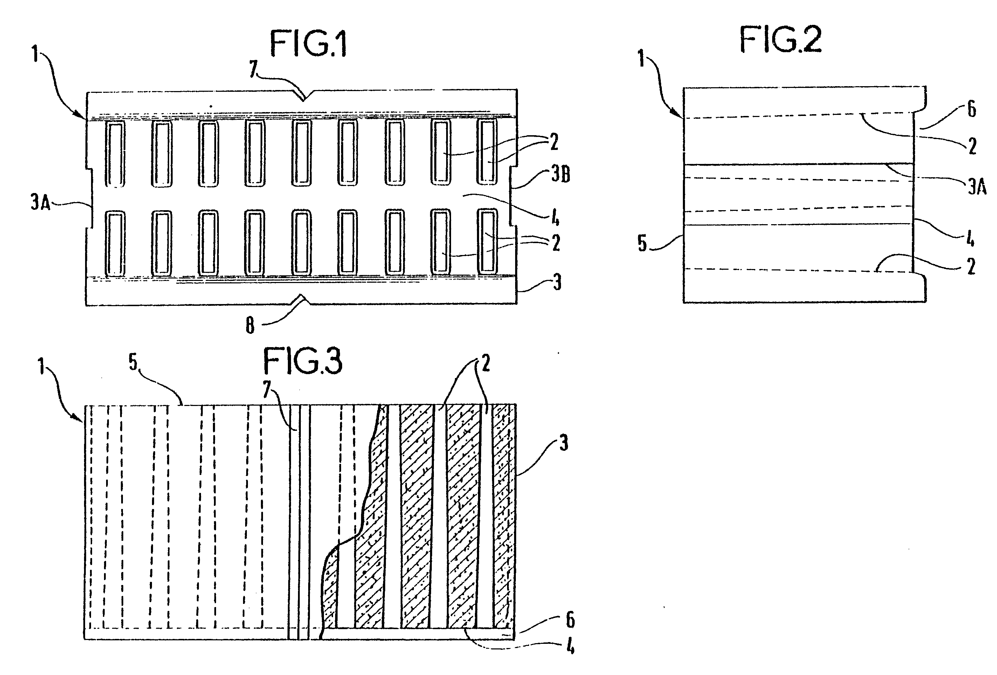

Les figures 1 à 3 représentent un bloc 1 accumulateur de chaleur. Il a une forme générale sensiblement parallélépipédique et il est réalisé en béton.

A titre indicatif et nullement limitatif, ses dimensions sont, exprimées en centimètres, 36 x 18 x 20.

Son poids est de 22 kg, ce qui correspond à un béton de densité 2,2 kg/dm$^3$. La capacité calorifique du béton est de 0,25 Kcal/kg°C environ.

Le bloc a une dimension (longueur) double d'une autre dimension (largeur). Cette disposition caractéristique de l'invention permet de disposer les blocs en quinconce selon deux directions.

Le bloc est percé de canaux 2, s'étendant parallèlement entre eux et parallèlement à une arête 3 du bloc, d'une face 4 à une face opposée 5.

Un évidement 6 est pratiqué dans l'une des faces 4 où débouchent les canaux. Cet évidement permet à l'air de passer des canaux d'un d'un bloc aux canaux d'un bloc voisin même si les deux blocs ne sont pas rigoureusement alignés. En outre, cette disposition permet de conférer à un dispositif de stockage thermique constitué d'une pluralité de blocs jointifs une conduction thermique faible dans la direction de circulation de l'air, assurant ainsi un fort gradient de température entre l'entrée et la sortie du dispositif.

Selon l'invention, les canaux ont une section rectangulaire allongée ce qui assure un échange thermique optimum et une perte de charge minimale. La section des canaux diminue légèrement d'une extrémité à l'autre pour faciliter le démoulage.

- 3 -

Selon une autre caractérisque, les rangées de canaux sont au nombre de deux au moins et de trois au plus. Pour assurer le meilleur échange thermique entre le bloc et l'air, la section moyenne des canaux et leur nombre sont choisis de telle manière que le rapport du produit du coefficient h d'échange thermique superficiel entre l'air et le béton par la demi-distance d entre deux canaux à la conductibilité thermique K du béton soit inférieur ou égal à 0,05. Dans l'exemple décrit, le nombre de rangées de canaux est de deux, le nombre de canaux par rangée de 9, et la demi-distance d de 0,013 mètres.

La valeur de h étant de 6,575 $W/m^2.°C$, et celle de K de 1,75 $W/m.°C$, le rapport précité vaut ici 0,0488.

Les canaux ont une dimension moyenne de 0,01 x 0,005 mètres. La surface d'échange par bloc est voisine de $0,5m^2.$

Des entailles 7 et 8 sont ménagées sur deux faces opposées du bloc. Elle servent d'amorce de rupture pour casser un bloc en deux parties égales, ces demi-blocs étant utilisés dans un empilement en quinconce.

Le bloc porte en outre des entailles rectangulaires 3A et 3B destinées à faciliter la manipulation et permettre le cerclage éventuel des empilements.

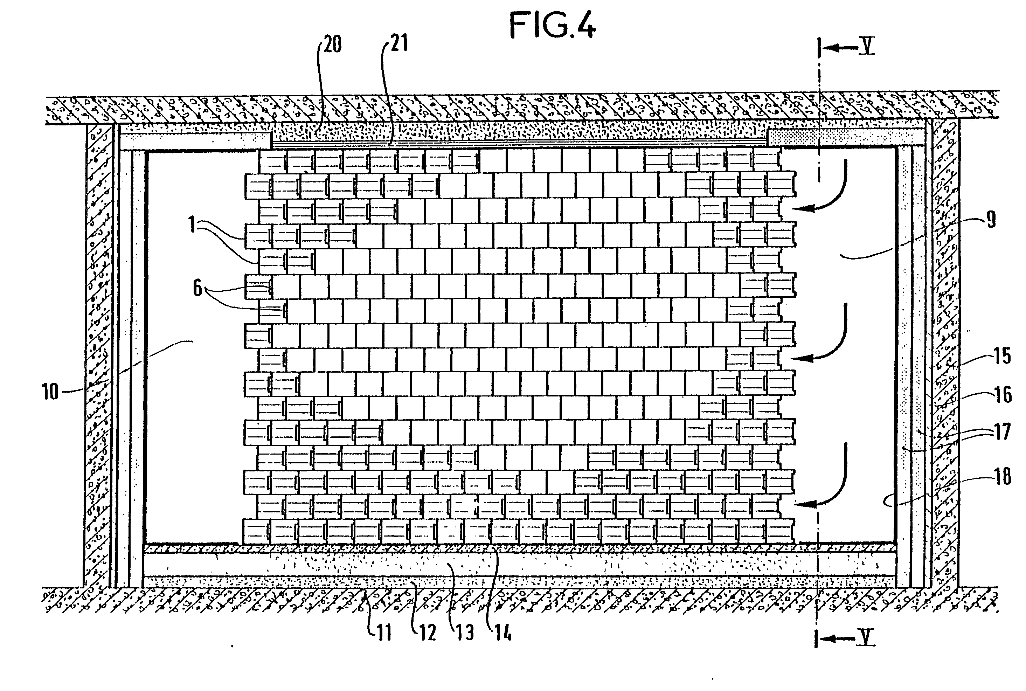

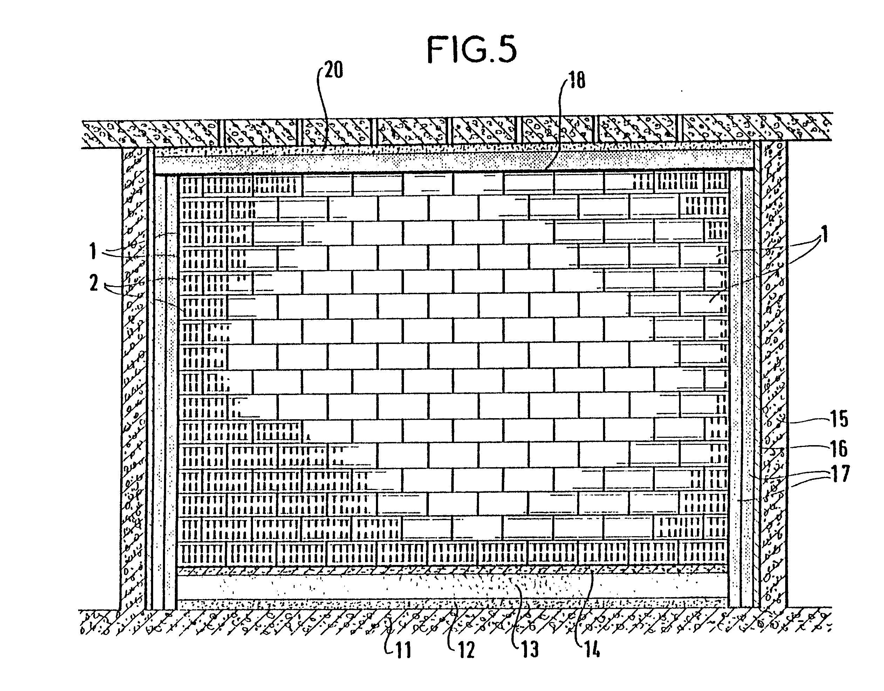

Les figures 4 et 5 montrent un dispositif d'échange thermique fait d'un empilement sensiblement parallélépipédique de blocs 1 du type précité, disposés en quinconce ; les canaux sont ici parallèles au plan du dessin de la figure 4 et l'air s'écoule parallèlement à ce plan, selon des filets horizontaux. On a désigné par la référence 9 un collecteur d'entrée et par 10 un collecteur de sortie. L'empilement repose sur une dalle 11 par l'intermédiaire d'une couche de sable 12, d'un isolant rigide 13 et d'une chappe 14. Les côtés de l'empilement, ainsi que le sommet, sont enfermés dans une maçonnerie 15 formant caisson étanche à l'air avec interposition d'un mur de doublage 16 et d'un ou plusieurs couches d'isolant thermique 17.

Les parois des collecteurs d'entrée et de sortie sont avantageusement revêtus d'une feuille d'aluminium 18 de protection contre la condensation.

De même le sommet de l'empilement porte une couche isolante 20 et une couche 21 d'un matériau suffisamment souple pour absorber les dilatations de l'empilement.

L'ensemble de l'empilement peut être ceinturé par des feuillards métalliques ou plastiques non représentés pour lui conférer une plus grande stabilité. Ces cerclages sont effectués dans les entailles 3A et 3B des blocs.

L'empilement est avantageusement réalisé en quinconce comme le montre les figures.

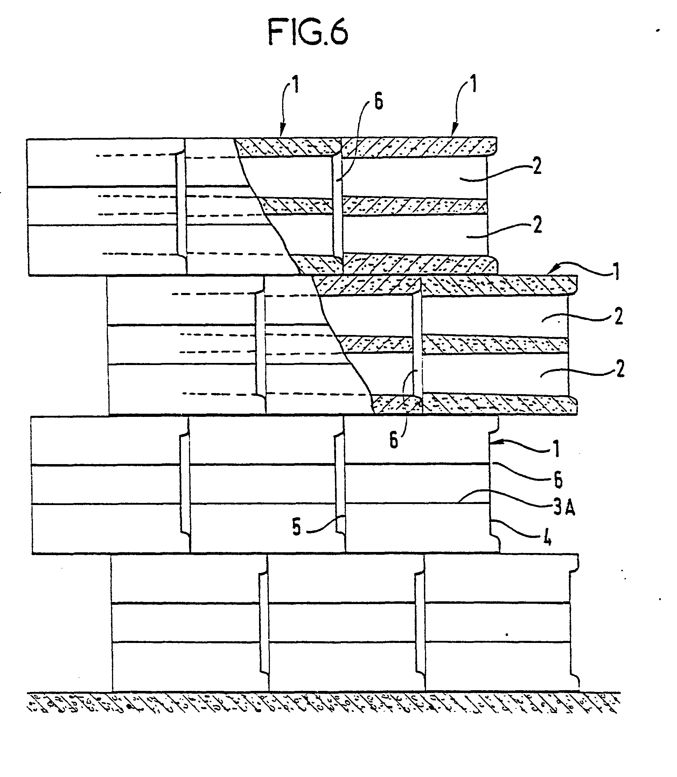

La figure 6 reproduit, agrandie et partiellement coupée, une partie de la figure 4 ; cette figure montre que l'évidement 6, procure un contact de faible surface entre les blocs, dans la direction d'écoulement de l'air, assurant ainsi une faible conductivité thermique de l'ensemble dans la direction considérée et, par voie de conséquence, un fort gradient thermique dans cette direction.

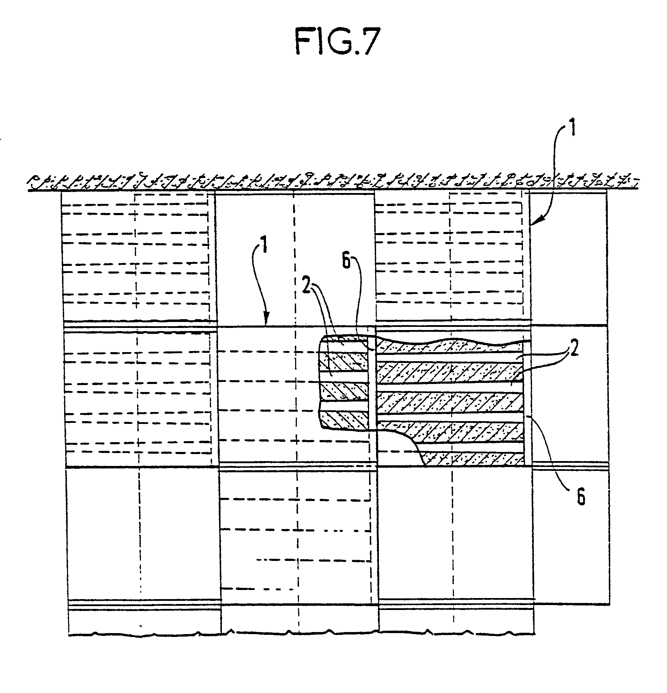

La figure 7, qui est une vue de dessus partiellement coupée de l'empilement, montre que l'évidement 6 permet à l'air de cheminer d'un bloc à l'autre bien que les divers canaux ne soient pas alignés.

REVENDICATIONS

1/ Bloc destiné à constituer par juxtaposition et/ou empilage de blocs identiques un accumulateur de chaleur, ledit bloc étant parallélépipédique et présentant une pluralité de canaux (2) perpendiculaires à sa plus grande dimension et débouchant sur deux faces opposées (4, 5), caractérisé sur ce que lesdits canaux (2) sont disposés en deux rangées au moins et trois rangées au plus, lesdites rangées étant parallèles à la plus grande dimension du bloc, la section des canaux étant rectangulaire, le nombre et la section moyenne des canaux étant choisis de manière que le rapport du produit du coefficient d'échange thermique superficiel entre l'air et le béton par la demi-distance entre deux canaux à la conductibilité thermique du béton soit inférieur ou égal à 0,05.

2/ Bloc selon la revendication 1, caractérisé en ce que la longueur du bloc est le double de sa largeur, lesdites longueur et largeur étant les deux dimensions du bloc perpendiculaires aux canaux (2).

3/ Bloc selon l'une des revendications 1 et 2, caractérisé en ce que la section des canaux diminue légèrement d'une extrémité à l'autrre.

4/ Accumulateur de chaleur, caractérisé en ce qu'il est constitué par empilage et/ou juxtaposition de blocs selon l'une des revendications 1 à 3.

FIG.1

FIG.2

FIG.3

1/5

0049669

# FIG.4

# FIG.5

FIG.6

FIG.7

**0049669**
Numéro de la demande

Office européen
des brevets

**RAPPORT DE RECHERCHE EUROPEENNE**

EP 81 40 1543

| Catégorie | Citation du document avec indication. en cas de besoin, des parties pertinentes | Revendication concernée |
|---|---|---|
| DOCUMENTS CONSIDERES COMME PERTINENTS | | |
| D | FR - A - 740 670 (OTTO) <br><br> * page 2, lignes 7-45; page 3, lignes 28-36; figures 1,2,3 * <br><br> -- | 1,4 |
| | US - A - 4 085 333 (GRISE) <br><br> * colonne 1, lignes 52-66; colonne 2, lignes 24-34; figure 2 * <br><br> -- | 1 |
| | US - A - 4 088 115 (POWELL) <br><br> * colonne 6, lignes 39-68; colonne 7, lignes 1-14; figures 10,11 * <br><br> -- | 1,4 |
| | EP - A - 0 004 551 (MESSERSCHMITT) <br><br> * page 4, premier paragraphe; figure 1 * <br><br> ---------- | 4 |

**CLASSEMENT DE LA DEMANDE (Int. Cl. 3)**

F 24 J   3/00
F 24 D 11/00

**DOMAINES TECHNIQUES RECHERCHES (Int. Cl. 3)**

F 24 J
F 24 D
F 28 F

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur. mais publié à la date de dépôt ou après cette date
D: cité dans la demande
L: cité pour d'autres raisons

&: membre de la même famille,
document correspondant

Le présent rapport de recherche a été établi pour toutes les revendications

| Lieu de la recherche | Date d'achèvement de la recherche | Examinateur |
|---|---|---|
| La Haye | 20-01-1982 | PERROTTA |

OEB Form 1503.1   06.78